# EUROPEAN PATENT SPECIFICATION

(11) **EP 3 952 211 B1**
(45) Date of publication and mention of the grant of the patent: **14.05.2025**
(21) Application number: 20189932.5
(22) Date of filing: 06.08.2020
(51) Int. Cl.: H04L 41/12, H04L 41/02, H04L 41/0853, H04L 41/0859

(54) **NETWORK TOPOLOGY**
NETZWERKTOPOLOGIE
TOPOLOGIE DE RÉSEAU

(43) Date of publication of application: 09.02.2022
(73) Proprietor: Nokia Solutions and Networks Oy, 02610 Espoo (FI)
(72) Inventor: KUMAR, Praveen S, 560022 Bangalore (IN)
(74) Representative: Whiting, Gary

(56) References cited:
- WO-A1-2015/065368
- WO-A2-2009/042919
- US-A1- 2003 009 552

## Description

### Field

The present specification relates to network topologies, particularly historical topology information.

### Background

Storing topology information is known. There remains a need for further developments in storing and providing historical topology information.

International patent publication WO2015065368A1 teaches a realized topology system management (RTSM) database, comprising a database, a number of stored realized topologies, and in which the realized topologies within the DBMS are searchable; and a method of generating and tracking a realized topology, comprising deriving a realized topology from an instantiated topology, storing the realized topology in a realized topology system management (RTSM) database, and storing a data file representing an association of the realized topology with data describing attributes of a number of nodes on the realized topology and relationships between the nodes.

### Summary

The invention is set out in the appended set of claims.

### Brief description of the drawings

Example embodiments will now be described, by way of example only, with reference to the following schematic drawings, in which:
FIGS. 1 to 3 show topologies in accordance with example embodiments;
FIG. 4 is a flow chart showing an algorithm in accordance with an example embodiment;
FIGs. 5 and 6 show databases in accordance with example embodiments;
FIGS. 7 and 8 show topologies in accordance with example embodiments;
FIG. 9 shows a message sequence in accordance with an example embodiment;
FIGs. 10 to 12 are flowcharts showing algorithms in accordance with example embodiments;
FIGs. 13 to 15 show topologies in accordance with example embodiments;
FIG. 16 is a block diagram of components of a system in accordance with an example embodiment; and
FIGS. 17A and 17B show tangible media, respectively a removable non-volatile memory unit and a Compact Disc (CD) storing computer-readable code which when run by a computer perform operations according to example embodiments.

### Detailed description

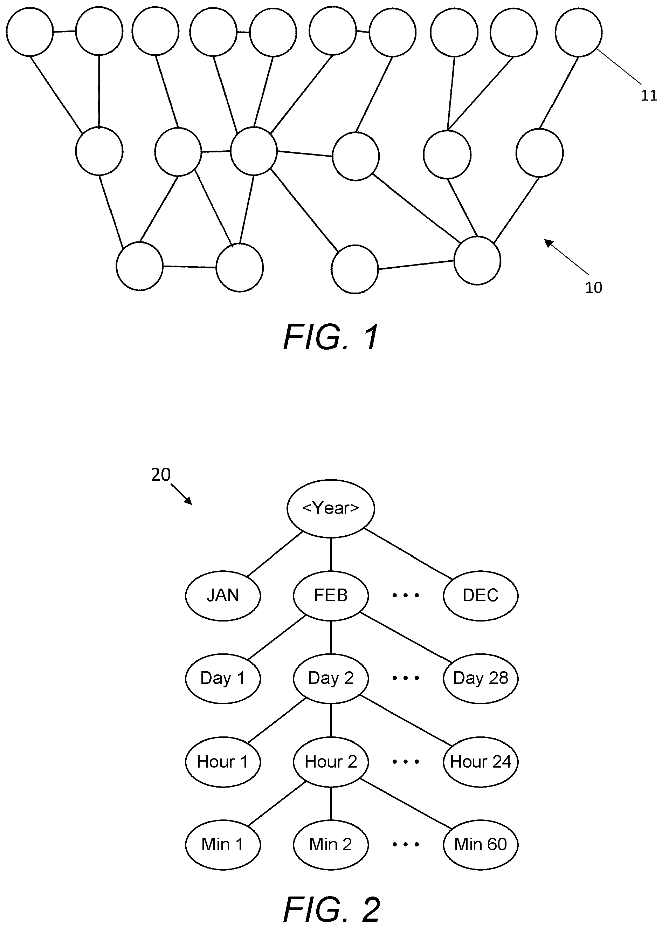

FIG. 1 shows a topology, indicated generally by the reference numeral 10, in accordance with an example embodiment. The topology 10 comprises a plurality of nodes of at least one network. The topology 10 further shows relationships between one or more of the plurality of nodes. The plurality of nodes may comprise one or more of network devices (e.g. base stations), user devices (e.g. user equipment), servers, virtual machines (VMs), network function virtualizations (NFVs), virtual network functions (VNFs), physical network functions (PNFs), or any logical or physical services/resources deployed in a network (e.g. a virtual lab, data centre, or cloud-based network). For example, node 11 may be one of the plurality of nodes in a first network. It will be appreciated that attributes, configurations, and/or relationships of nodes of a network may change over time. It may be useful to analyse current topology of networks and/or changes in the network, including changes in attributes, configurations, and/or relationships of nodes in the network. Some example embodiments provided below describe provision of topology information for analysis.

FIG. 2 shows an example topology, indicated generally by the reference numeral 20. For example, the topology 20 may be a representation of a current or historical state of a single node, such as the node 11 in the topology 10 described above. In general, when a network topology is stored, historical data related to one or more nodes of the network may be stored individually, and may be presented similar to the topology 20. For example, the historical data related to node 11 may be presented with reference to the specific date and/or time, as shown in the topology 20 (e.g. year, month, day, hour, minute). Storing metadata related to the nodes, storing relationships of the nodes, storing dense node issues, or the like may be inconvenient in a database structure such as the topology 20. Retrieving historical data (e.g. a time series) for a node or a relationship of a node may be complex and time consuming, as it may require checking each historical time period or time instance to determine when or how a node or relationship was modified. The historical data presented in such a way may not provide information about a node (e.g. changes in the node or changes in the relationships of the node) in a way that is optimal for analysis.

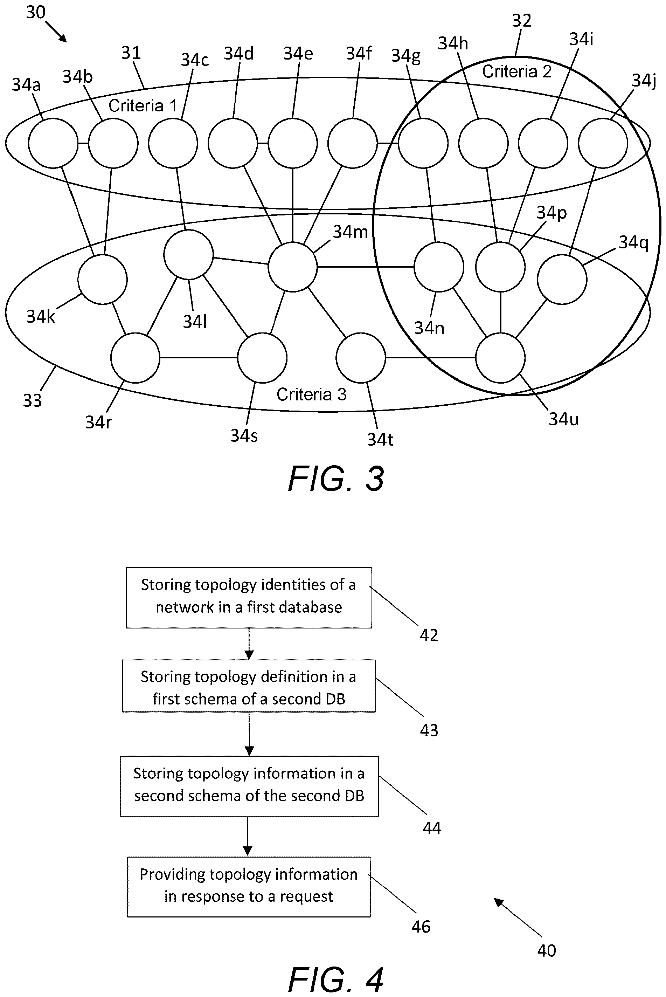

FIG. 3 shows a topology, indicated generally by the reference numeral 30, in accordance with an example embodiment. The topology 30 comprises a plurality of nodes 34, where the plurality of nodes 34 may belong to a first network. The topology 30 may be formed based on one or more criteria, such as a first criteria 31, a second criteria 32, and a third criteria 33.

For example, one or more criteria may be defined (e.g. manually by a user or network administrator, or automatically based on one or more default filters) for retrieving information related to one or more nodes matching the defined criteria. The criteria may, for example, comprise filtering criteria for physical resources in a network and/or or data centre, physical and/or logical resources for a service (e.g. virtual private network (VPN) service), nodes associated with a network for a specific user (e.g. Enterprise VPN), or any other filters that may be used for analysing nodes matching the criteria. The filtering criteria may further comprise instructions such as returning a topology comprising only entities matching the filtering criteria (e.g. including source and target entities), filters for association/relationships (e.g. including path selection for excluding or including association/relationships based on filtering criteria), filters for location (e.g. lab, home, office, etc.), geographical area (e.g. city, country, etc.), filters for number of hops, time to live (TTL), or the like.

As shown in the topology 30, the nodes 34a to 34j match the first criteria 31, the nodes 34g to 34j, 34n, 34P, 34q and 34u match the second criteria 32, and the nodes 34k to 34q match the third criteria 33. As such, one or more nodes (such as the nodes 34g to 34j, 34n, 34P, 34q and 34u) may match more than one criteria at the same time, based on how the criteria are defined.

In an example embodiment, the criteria may be used to identify one or more topologies, such that nodes matching a certain criteria may be part of the respective topology. For example, nodes 34a to 34j matching the first criteria 31 may form part of a first topology, where the first topology is comprised within the topology 30. Similarly, nodes matching the second criteria 32 and nodes matching the third criteria 33 may form part of a second and third topology respectively, where the second and third topology may also be comprised within the topology 30. Some example embodiments describe how topology information may be stored in a database, such that filtering criteria may be applied in order to retrieve historical data related to one or more topologies.

FIG. 4 is a flowchart of an algorithm, indicated generally by the reference numeral 40, in accordance with an example embodiment.

The algorithm 40 may start at operation 42, where a plurality of topology identities of a network are stored in a first database. For example, the first database may comprise a

FIG. 4 is a flowchart of an algorithm, indicated generally by the reference numeral 40, in accordance with an example embodiment.

The algorithm 40 may start at operation 42, where a plurality of topology identities of a network are stored in a first database. For example, the first database may comprise a graph database (e.g. Neo4j database), that may store a current topology and/or a plurality of topology identities (e.g. first criteria, second criteria, third criteria). The network may comprise a plurality of nodes (e.g. the nodes 34 described above). The first database may be updated regularly (e.g. by an application for providing topology information) as the current topology of the network changes, and/or if one or more new criteria are defined. For example, if any entry in the first database is updated (e.g. any part of the topology changes), a trigger may be generated for updating a second database comprising historical topology information.

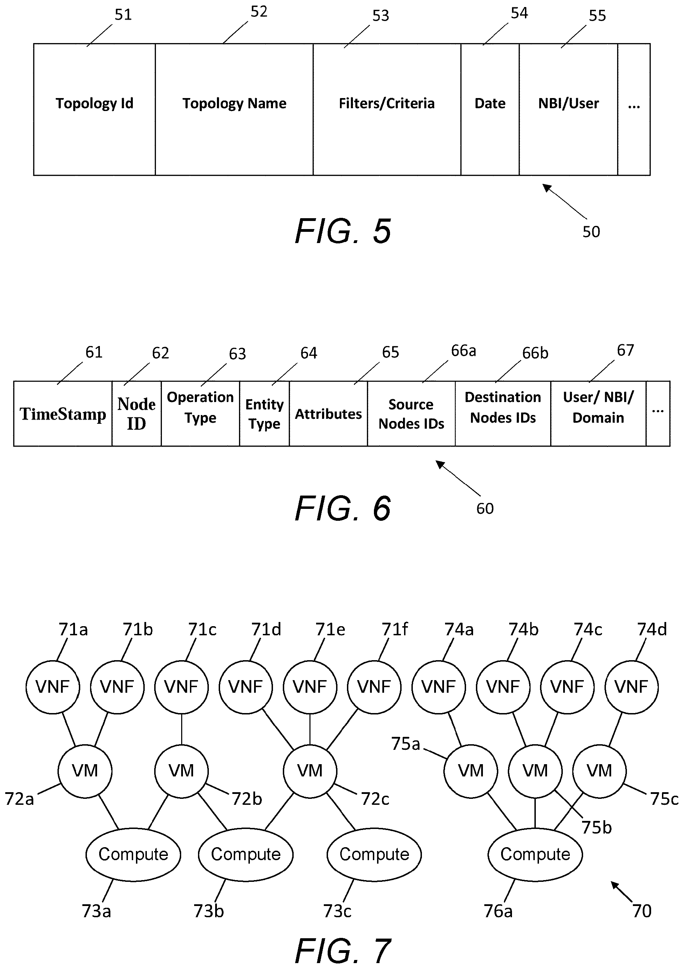

At operation 43, one or more topology definitions (e.g. corresponding to the plurality of topology identities) are stored in a first schema of a second database. In one example, the second database may comprise a relational database, such as any Oracle database, postgreSQL, or scalable database (e.g. 'Elastic', 'Big Data', etc.). The second database comprises at least two schemas, namely the first schema and a second schema. The first schema may be configured to store one or more topology definitions, as described in further details below with reference to FIG. 5. The second schema may be configured to store historical topology information, as described in further details below with reference to FIG. 6.

At operation 44, a plurality of topology information corresponding to the plurality of topology identities are stored in the second schema of the second database. The plurality of topology information may comprise historical topology information related to identities of one or more of the plurality of nodes of the network and relationship(s) between one or more of the plurality of nodes. Examples of historical topology information, including the identity and/or relationships of nodes, are described in further detail below.

In an example embodiment, nodes or node relationships included in the second database (the first schema and the second schema) may be same or different to the nodes in the first database, as the first database may only show the nodes in the current At operation 46, one or more of the plurality of topology information is provided in response to one or more requests. For example, a user may send a request for retrieving topology information, such as historical topology information, for a specific topology identity (e.g. comprising one or more nodes matching a specific criteria). The one or more requests may specify one or more of the plurality of topology identities (e.g. first criteria, second criteria, and/or third criteria) and/or one or more filtering criteria (e.g. specifying characteristics of the filtering criteria, e.g. VPN nodes, etc.) for selection of the one or more of the plurality of topology information. Therefore, the topology information may be provided at operation 46 based on the topology identity and/or filtering criteria specified in the request.

In one example, one or more of the plurality of topology information may be provided for representation according to relations between one or more nodes. For example, the representation may comprise historical topology information, such that a user (e.g. a user sending the request) may analyse how and/or when the topology (e.g. nodes or relationships between nodes) changed over time.

In an example embodiment, the topology information may be provided as information suitable for display in graphical form. For example, the topology information may be provided in a specified format such as JSON, XML, or the like, in order to enable graphical representation of the topology, for example, at a given time.

In an example embodiment, the number of entries in the first database may be relatively low compared to that in the second database, as the first database may only need to store topology identities (e.g. identity name or number) and/or current topology, rather than a large number of entries for historical topology information. The second database may have a relatively large number of entries comprising topology definitions (e.g. in the first schema) and/or historical information (e.g. in the second schema) of one or more nodes comprised within the network. When a request is received, the second database is queried based on one or more filters comprised within the request, such that historical topology information necessary for determining a historic version of a given topology at a given time may be obtained and provided in response to the request.

In an example embodiment, the historical topology information may further be related to one or more attributes of one or more of the plurality of nodes. For example, the attributes may comprise network configuration (e.g. including network interface settings, internet protocol (IP) address, domain name service (DNS) configuration, public or private accessibility, connection type, or the like) and/or other configuration (e.g. power mode settings, user interface settings, or the like). The attributes may further comprise location information (e.g. geographical location, indication of outdoor or indoor use, indication of moving or stationary use, or the like).

In an example embodiment, the topology information comprises information of one or more operations performed on one or more of the plurality of nodes. For example, the operations may create a node or a node relationship, updating a node or a node relationship, and/or deleting a node or a node relationship.

FIG. 5 is a database, indicated generally by the reference numeral 50, in accordance with an example embodiment. The database 50 may be an example of the first schema of the second database as described above with reference to the operation 43. The first schema may be configured to store one or more topology definitions (e.g. operation 43). For example, the database 50 (e.g. first schema of the second database) may be arranged according to one or more of a topology identification 51, filtering criteria 53, date 54, and/or user identification 55. The database 50 may optionally further comprise a topology name 52.

In an example embodiment, the user identification 55 may indicate identity of a user of one or more nodes of the topology. For example, a topology (e.g. specified by the topology identification 51) may comprise a plurality of physical and/or logical resources (e.g. compute modules or memory in a data centre) connected to virtual machines (VMs), where the VMs may in turn be connected to virtual network functions (VNFs). The VNF services may run continuously, while the underlying VMs (or compute modules) may dynamically change due to the scaling of applications or resources in the network. As such, the user identification 55 may indicate the identity of the underlying VMs as they change dynamically.

In an example embodiment, the database 50 may further comprise information relating to one or more northbound interfaces (NBIs) associated with one or more nodes of the topology. For example, the information relating to the NBIs may indicate which one or more interfaces are being used by one or more nodes of the topology to connect to one or more higher level nodes (e.g. of the same network or other networks).

In an example embodiment, the second database may be queried to retrieve topology information, such as topology definitions (e.g. from the first schema) and historical topology information (e.g. from the second schema) of a specific topology (e.g. a topology comprising nodes that match a specific criteria). The historical topology information may be retrieved from the second schema. The second schema of the second database may comprise historical topology information of the specific topology at a given time, and may also comprise historical information of one or more nodes or relationships between nodes at a given time.

It will be appreciated that the first schema of the second database is not limited to the structure of the database 50, such that the first schema may comprise one or more other entries instead of, or in addition to the entries 51 to 55 shown in FIG. 5.

FIG. 6 is a database, indicated generally by the reference numeral 60, in accordance with an example embodiment. The database 60 may be an example of the second schema of the second database as described above with reference to the operation 44. For example, the database 60 (e.g. second schema) may be arranged according to one or more of a time stamp 61, a node identification 62, an operation type 63, an entity type 64, attributes 65, and/or user and/or domain identification 67. The database 60 may optionally further comprise source nodes identities 66a and/or destination node identities 66b.

It will be appreciated that the first schema and second schema of the first database is not limited to any specific types of nodes, relationships, or domains. As such, when definitions, configurations, and/or properties of one or more nodes, node relationships, or domains change, the first schema and the second schema of the second database need not be changed to include the changes in the definitions, configurations, and/or properties. The second schema may store historical information regarding any types of nodes, node relationships, or domains. The example embodiments enable the storing of historical topology information, including any changes in the definitions, configurations and/or properties without changing the structure or definition of the first schema and/or the second schema. The example embodiments therefore provide a solution for storing historical topology information that is domain agnostic.

In one example embodiment, the timestamp 61 may indicate a historical time instance corresponding to the respective historical topology information stored. As such, the information 62 to 67 may be stored with respect to the historical time indicated by the timestamp 61. When a request for historical topology information is received, the request may specify the time instance or time period for which historical topology information is requested. The second database may then be queried according to the request for retrieving the information with respect to the specified time instance or time period.

In an example embodiment, the node identification 62 may indicate identity of one or more nodes of the topology. For example, the information 63 to 67 may be stored with respect to each node of a topology, where the node is identified with the node identification 62. For example, the node identification 62 may comprise a universally unique identifier (UUID) and/or a global database network identifier (GDN ID).

In an example embodiment, the operation type 63 may comprise information of the type of operation performed on a node or a node relationship. For example, the type of operation comprises creating a node or a node relationship, updating a node or a node relationship, and/or deleting a node or a node relationship.

In an example embodiment, the entity type 64 may indicate whether an entry relates to a node or a node relationship. A node relationship may, for example, comprise private connection, public connection, computing connection, or the like. For example, when an entry relates to a node (e.g. specified with node ID 62), the operation type 63 may indicate, with respect to the timestamp 61, creation, update, or deletion of a node. Alternatively, or in addition, when an entry relates to a node relationship, the operation type 63 may indicate, with respect to the timestamp 61, creation, update, or deletion of a relationship between one or more nodes. For example, creation of a relationship may include configuring connection between two or more nodes; deletion of a relationship may include disconnecting two or more nodes; and updating a relationship may include changing the type of relationship (e.g. changing from a private to a public connection, or vice versa; adding or removing one or more hops within the connection between nodes, or the like).

In an example embodiment, the node relationship may further include relationships such as a node (e.g. a virtual network function) "residing on" another node (e.g. a virtual machine); such a relationship may be indicated with a "residing on" relationship between the virtual network function node and the virtual machine. Alternatively, or in addition, a relationship may include a node "consuming" a service or resource; such a relationship may be indicated with a "consuming" relationship between the node and the service or resource. Alternatively, or in addition, a relationship may include a node "comprising" another node (e.g. a physical card comprising physical ports); such a relationship may be indicated with a "comprising" relationship between the node (e.g. a physical resource, such as a physical card) and another node (e.g. another physical resource, such as physical ports).

In an example embodiment, the attributes 65 may comprise one or more of current node attributes, historical node attributes, and/or node relationship attributes. As described above, the node attributes (current or historical) may comprise network or other configuration of the node, or node relationships, and/or location information of one or more nodes.

In an example embodiment, the source node identification 66a and/or destination node identification 66b may be used when the entity type 64 is a node relationship. As such, the source node identification 66a and/or destination node identification 66b may indicate the source and destination of a specific relationship (current or historical) with respect to time specified in timestamp 61. Alternatively, or in addition, the source and/or destination node identification 66 may specify one or more other devices that a node (e.g. specified by the node ID 62) may be connected to (directly or indirectly).

In an example embodiment, the user and/or domain identification 67 may specify the user of a node (current and/or historical), northbound interface of a node, and/or domain (e.g. a group of nodes, for example, according to a criteria). In one example, the user and/or domain identification 67 may specify application users, northbound interface users, and/or domain users from internal and/or external systems, which users may have triggered the operation specified in the operation type 63 for a node (e.g. specified in the node ID 62).

It will be appreciated that the second schema of the second database is not limited to the structure of the database 60, such that the second schema may comprise one or more other entries instead of, or in addition to the entries 61 to 67 shown in FIG. 6.

FIG. 7 shows a topology, indicated generally by the reference numeral 70, in accordance with an example embodiment. The topology 70 comprises an example topology, as represented graphically, based on a criteria. For example, the criteria may be specified in a request for topology information (e.g. historical topology information). For example, a filtering criteria may be specified for all nodes comprising a virtual network function and/or a virtual machine, and for all 'compute' relationships. The topology 70 may be provided based on the filtering criteria, where the topology 70 comprises representations of a first group of nodes comprising virtual network functions 71a to 71f, virtual machines 72a to 72c, and 'compute' relationships 73a to 73b, and the relationships therebetween. The topology 70 further comprises representations of a second group of nodes comprising virtual network functions 74a to 74d, virtual machines 75a to 75c, and 'compute' relationship 76a, and the relationships therebetween. Topology 70 shows the first and second group of nodes together or separately based on the filtering criteria, even if there are no connections between the first and second groups. It will be appreciated that the nodes (VNFs and VMs) and node relationships ("compute" relationship) shown in FIG. 7 are an example implementation only, such that other types of nodes and node relationships may also be shown in the topology information.

In an example embodiment, the topology 70 may be represented and stored in a graph database, such as the first database (such as neo4j database) described with reference to FIG. 3 above. The nodes represented in the topology 70 may be a subset of a larger collection of data present in the first database, such that the subset is represented as the topology 70 for simplification. The subset may be formed based on one or more filtering criteria defined in a request as described above.

In one example, the topology 70 may comprise a vertical correlation or a horizontal correlation. For example, logical services may rely on underlying infrastructure and/or resources. For a vertical correlation, the historical topology information of the network may be provided based on the filtering criteria (e.g. all services running on virtual machines), which may then consume underlying 'compute' nodes in open stack. This filtering criteria may provide the vertical correlation shown in the topology 70.

Similar information may be provided for historical topology information, for example, to show how the topology changed over time, or how the topology was configured at a historical time instance or time period.

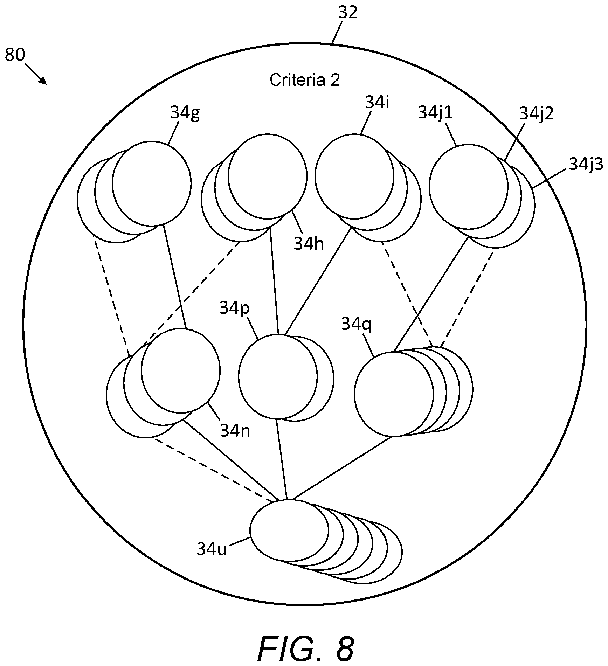

FIG. 8 shows a topology, indicated generally by the reference numeral 80, in accordance with an example embodiment. The topology 80 comprises nodes 34g to 34j, 34n to 34q and 34u, as filtered based on the second criteria 32, described above with reference to FIG. 3. The topology 80 further comprises representations of one or more historical states of the nodes. For example, one or more changes in the node 34j over a time period may be represented by 34j1, 34j2, and 34j3 (e.g. enabling a user to select any one of the representations to retrieve details about the historical data). In one example, the solid lines connecting one or more nodes (e.g. 34g-34n, 34h-34P, 34i-34p, 34j-34q, 34n-34u, 34p-34u, 34q-34u) may represent current relationships (e.g. connections between nodes). The dotted lines connecting one or more nodes (e.g. 34g-34n, 34h-34n, 34i-34q, 34j-34q, 34n-34u) may represent historical relationships (e.g. connections between nodes).

In an example embodiment, the representations 34j1 to 34j3 may be considered as versions of the node 34j. For example, a user may be enabled, by selecting one of the versions 34j1 to 34j3, to view a series of operations (e.g. create, delete, update) over a time that is performed on the node 34j throughout its lifetime in the second schema of the second database, and/or from a creation time until a deletion or another specific time, including intermediate updates during that time.

In an example embodiment, historical topology information may be accessed online or offline for analysis and/or debugging in case there is a problem in the network or one or more nodes of the network.

In an example embodiment, the representation of changes in nodes and/or changes in node relationships as shown in the topology 80, may assist in making the topology analysis time efficient and any debugging may be easier to perform, as the changes and details of the changes may easily be detected. This may be an improvement to using a single graph database comprising a plurality of nodes, and having to go through all historical details of each node presented according to a timeline (e.g. topology 20), as going through each node to detect a particular node causing network issues may be troublesome.

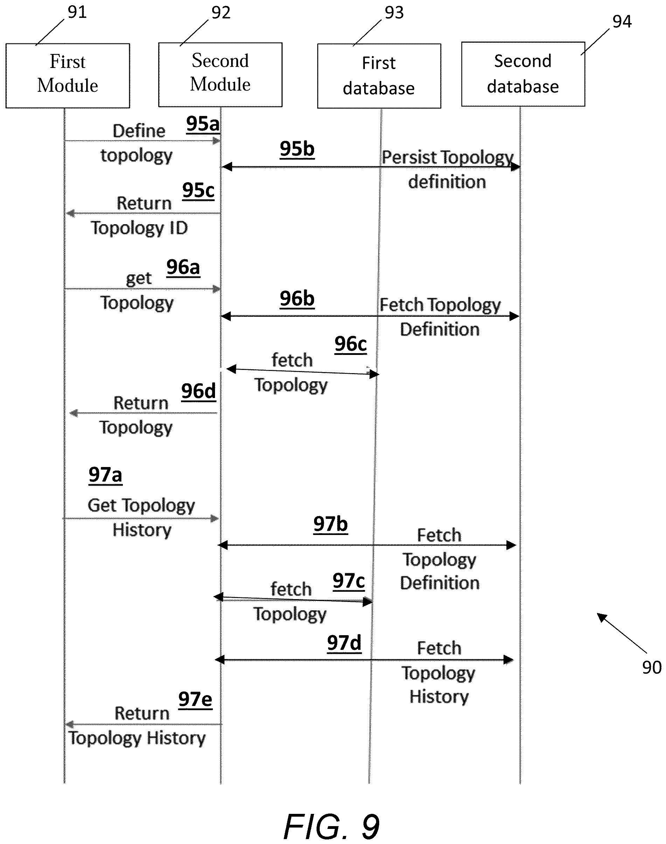

FIG. 9 is a message sequence of an algorithm, indicated generally by the reference numeral 90, in accordance with an example embodiment. The algorithm 90 shows messages between a first module 91, a second module 92, a first database 93 (e.g. a graph database), and a second database 94 (e.g. comprising a first schema and a second schema as shown in the databases 50 and 60 respectively).

In an example embodiment, the first module 91 may comprise a digital operations centre (e.g. any north bound application), and the second module 92 may comprise a unified inventory (e.g. any application providing features relating to providing network topology information). For example, the second module 92 may store the first database, including the first database 93 and second database 94, such that the first module 91 may query the second module 92 for obtaining historical topology information for a given time instance or time period.

At operation 95a, the first module 91 requests topology information from the second module 92, for example, by defining a topology using one or more filtering criteria. The topology definition comprised within the request of operation 95a may be stored in the first schema of the second database 94. At operation 95b, a topology definition is provided by the second module 92 to the second database 94 (e.g. to be persisted in the first schema of the second database), for example, based on the filtering criteria of operation 95a. For example, the second database 94 may be queried in order to determine which nodes of a given network match the criteria in the defined topology. Alternatively, or in addition, the operation 95b may create a criteria at the first schema of the second database 94for defining the topology matching the criteria. At operation 95c, a topology identity may be provided to the first module 91. The algorithm may then move on to operations 96.

In an example embodiment, when a topology is defined at operation 95a, and the topology definition is provided at the first schema of the second database 94 at operation 95b, the topology identification and definition may be used for persisting the topology (e.g. according to the specified criteria) for reuse in future topology information requests.

At operation 96a, the first module 91 may query the second module 92 to receive historical topology information, for example, using the topology identification provided at operation 95c. In response to the message at operation 96a, the second module 92 may query the second database 94 to fetch a topology definition (e.g. nodes matching a specific topology criteria) at operation 96b, and may also query the first database 93 to

At operation 96a, the first module 91 may query the second module 92 to receive historical topology information, for example, using the topology identification provided at operation 95c. In response to the message at operation 96a, the second module 92 may query the second database 94 to fetch a topology definition (e.g. nodes matching a specific topology criteria) at operation 96b, and may also query the first database 93 to fetch a current topology (e.g. live topology data) at operation 96c. At operation 96d, the current topology, as defined by the specific criteria, may be returned to the first module 91.

In one example embodiment, instead of querying the second database 94 to retrieve the defined topology criteria, the first module 91 may directly send the topology criteria in an application programming interface as part of the operation 96a. In this case, the operation 96b by the second module 92 may be omitted, such that the first module 91 may directly interact with the first database 93 for retrieving topology information for a given criteria.

In an example embodiment, if the topology identity is provided at operation 96a and stored in the first schema of the second database 94, the second module 92 may first query the first schema of the second database 94 to fetch a topology criteria corresponding to the topology identity, and may then interact with the second schema of the second database 94 to retrieve topology information corresponding to the topology criteria.

At operation 97a, the first module 91 sends a request to the second module 92 to retrieve topology history. At operation 97b, a topology definition is retrieved from the first schema of the second database 94 based on one or more filtering criteria in the request at operation 97a. At operation 97c, the current topology is retrieved from the first database 93 based on one or more filtering criteria in the request. At operation 97d, the historical topology information is retrieved from the second schema of the second database 94, where the historical topology information may comprise historical information related to nodes of the topology, and/or node relationships. At operation 97e, the historical topology information is returned to the first module 91.

In an example embodiment, a plurality of instructions may be sent in relation to topology history to the first and/or second database. For example, a and a 'getEntitesHistory' instruction may fetch the history of one or more entities (e.g. nodes or node relationships) that match a specific criteria.

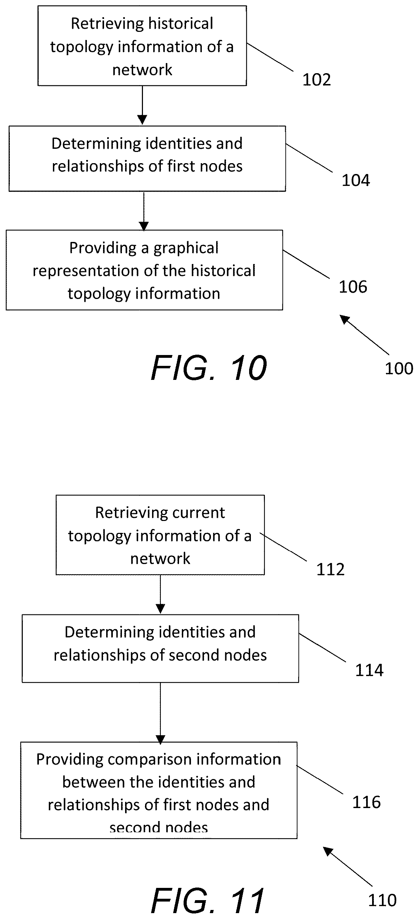

FIG. 10 is a flowchart of an algorithm, indicated generally by the reference numeral 100, in accordance with an example embodiment. The operations of the algorithm 100 may be performed in response to a request for topology information (e.g. historical topology information).

At operation 102, historical topology information of a first network may be retrieved in response to a request, for example, according to a filtering criteria and/or a first historical time (e.g. time instance or time period) specified in the request.

At operation 104, identities of a first one or more nodes of the network, as at the first historical time, may be determined. For example, the network may comprise one or more different nodes at the first historical time compared to the current network topology. As such, the identities of nodes that were comprised within the network at the first historical time may be determined. Similarly, relationships between the first one or more nodes of the network at the first historical time is also determined.

At operation 106, information suitable for graphical representation of the historical topology information may be provided in response to the request. For example, the information may comprise JSON or XML data which may then be used for providing graphical representation (e.g. topology 80 described above) of the historical topology information. The graphical representation may comprise representations of the first one or more nodes of the network as at the first historical time and representations of relationships between the first one or more nodes of the network as at the first historical time.

FIG. 11 is a flowchart indicated generally by the reference numeral 110, in accordance with an example embodiment. In one example, the operations of the algorithm 110 may be performed in response to a request, for example, in addition to the operations of the algorithm 100.

At operation 112, current topology information of a network, such as the first network, may be retrieved. For example, the current topology information may be retrieved from the first database (e.g. a graph database).

At operation 114, identities of a second one or more nodes of the network as at the current time may be determined. Further, relationships between the second one or more nodes of the network as at the current time may also be determined. Alternatively, or in addition, identities of a second one or more nodes of the network as at any second time instance may be determined.

At operation 116, comparison information may be provided, where the comparison information comprises a comparison between the identities of and relationships between the first one or more nodes and the identities of and relationships between the second one or more nodes.

In an example embodiment, the comparison information may include information regarding one or more operations performed on the first one or more nodes in a first time period between the first historical time and the current time (and/or the second time instance).

In an example embodiment, the second one or more nodes comprises one or more of the first one or more nodes. As such, there may or may not be one or more common nodes in the current topology and the historical topology.

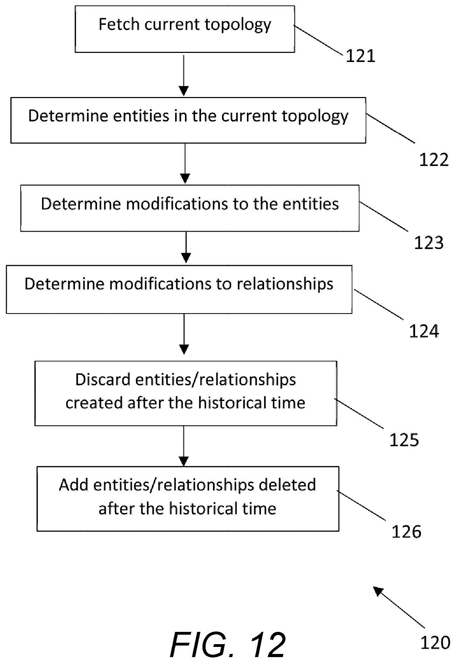

FIG. 12 is a flowchart, indicated generally by the reference numeral 120, in accordance with an example embodiment. In an example embodiment, when the historical topology information is requested for a given historical time, such as the first historical time, the operations of the algorithm 120 may be performed for purposes of graphically representing the historical topology in response to the request.

At operation 121, a current topology of a network is retrieved, for example, from live data in the first database.

At operation 122, entities (e.g. nodes) of the current topology are determined and listed. At operation 123, one or more modifications made to the entities in the time period starting from the first historical time to the current time (and/or the second time instance) may be determined.

At operation 124, one or more modifications made to the relationships between the entities in the time period starting from the first historical time to the current time (and/or the second time instance) may be determined. For example, in the second database, all the relationships (having source/destination entity ID matching the entities in the live topology) that were modified in the time period may be determined as modifications. With this we would also be able retrieve deleted entities (by fetching all the Entities that got created/deleted post the mentioned timeline) also for a given topology in a given timeline.

At operation 125, entities and/or relationships that were created after the first historical time may be discarded for the purposes of graphical representation. At operation 126, entities and/or relationships that were deleted after the first historical time may be added for the purposes of the graphical representation. As such, the historical topology information may be provided to represent the topology of the network as at the historical time.

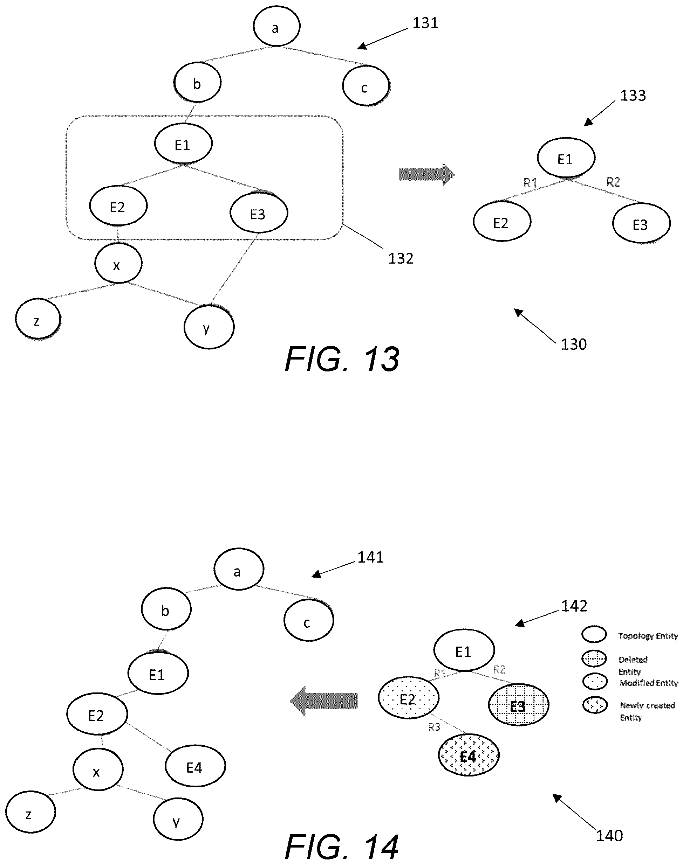

FIG. 13 shows a topology, indicated generally by a reference numeral 130, in accordance with an example embodiment. The topology 130 shows a first topology 131 and a topology subset 133. The first topology 131 may be a historical topology at a first historical time. A filtering criteria may be applied to the first topology 131, such that a group of nodes 132 match the filtering criteria. As such, the group of nodes 132 may represent the topology subset 133. The group if nodes 132 may comprise nodes E1, E2, and E3, where E1 has a relationship R1 with E2, and E1 has a relationship R2 with E3. One or more changes in the nodes and/or node relationships over time will be discussed below with reference to FIG. 14.

FIG. 14 comprises a topology, indicated generally by the reference numeral 140, in accordance with an example embodiment. The topology 140 comprises a current topology 141 and information 142 showing modifications made with respect to a historical topology, such as the first topology 131 described above. As shown in the information 142, in the time period from the first historical time and the current time, the node E3 was deleted, and the relationship between the node E1 and E3 was also deleted. The node E2 was modified, and the node E4 was newly created.

In an example embodiment, the user may select one or more of the modifications to view details of the modifications. For example, a list of the modifications may be displayed as follows in Table 1:

**Table 1**

| **Entity** | **Operation** | **Timeline** |
|---|---|---|
| E2 | Updated | Time 'T1' |
| E3 | deleted | Time 'T2' |
| E4 | added | Time 'T3' |

In an example embodiment, the modifications may be displayed in more detail, for example, according to the following entries in Table 2:

**Table 2**

| **Time stamp** | **UUID/ GDN** | **Operation Type** | **Entity type** | **Attributes/ values** | **Source ID** | **Destination ID** | **User/ NBI/ Domain** |
|---|---|---|---|---|---|---|---|
| : | : | : | : | : | : | : | : |
| T1 | GDN_E2 | Updated | Entity | XXX | Null | Null | userX |
| T2 | GDN_E3 | Deleted | Entity | XXX | Null | Null | userX |
| T2 | GDN_R2 | Deleted | Relationship | XXX | GDN_E1 | GDN_E2 | userX |
| T3 | GDN_E4 | Created | Entity | XXX | Null | Null | userX |
| T3 | GDN_R3 | Created | Relationship | XXX | GDN_E2 | GDN_E4 | userX |
| : | : | : | : | : | : | : | : |

For example, the table 2 is arranged based on the second schema of the second database, including a timestamp, node identification, operation type, entity type, attributes, source and/or destination identification, and/or user identification (e.g. similar to the database 60 described with respect to FIG. 6).

For example, a first entry (first row) of table 2 shows that at time T1, node E2 was updated; a second entry (second row) of table 2 shows that at time T2, node E3 is deleted; a third entry (third row) of table 2 shows that at T2, relationship R2 (between source E1 and destination E3) is deleted; a fourth entry (fourth row) of table 2 shows that at time T3, node E4 was created; and a fifth entry (fifth row) of table 2 shows that at T3, relationship R3 (between source E2 and destination E4) is created.

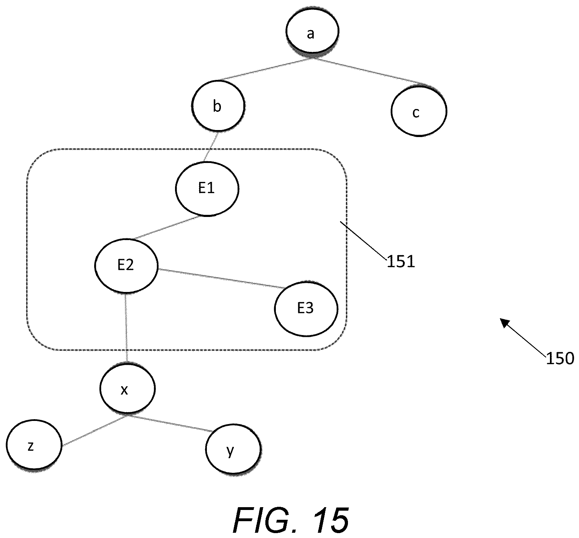

FIG. 15 shows a topology, indicated by the refernece numeral 150, in accordance with an example embodiment. The topology 150 may be a current topology similar to the current topology 141 shown in FIG. 14. As such, once the modifications in the nodes and/or relationships have been analysed, the same algorithm for filtering and/or analyzing modifications may be applied to any other nodes of the current topology 150. The group of nodes 151 show the current state of the nodes matching the filtering criteria entered, for example, in a request for topology information.

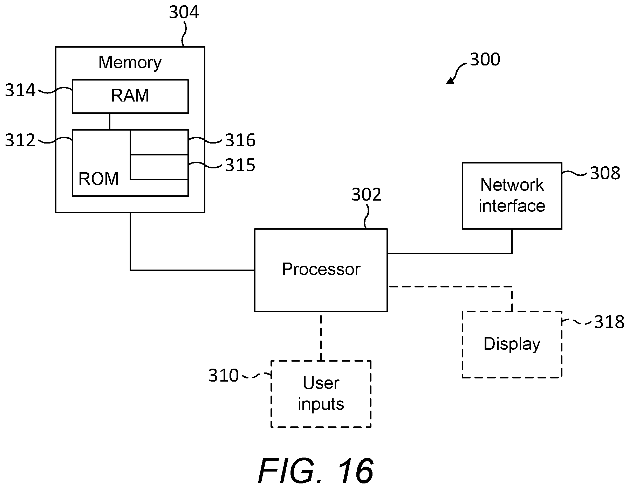

For completeness, FIG. 16 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms and message sequences 40, 90, 100, 110, and 120 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

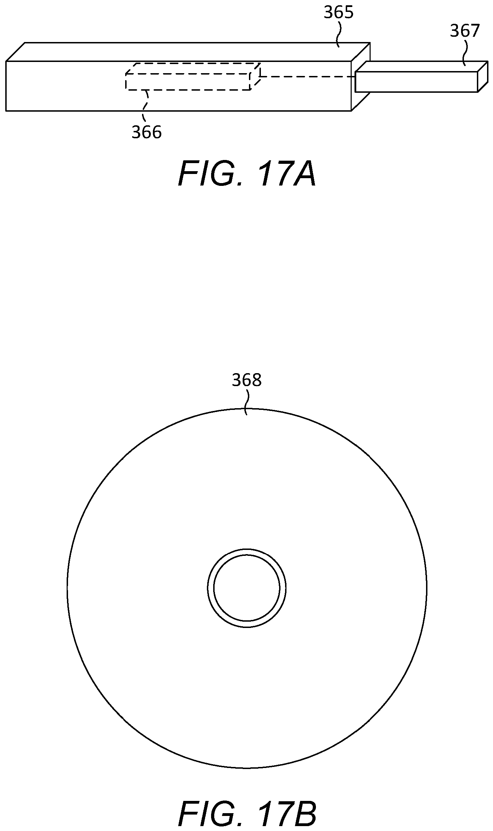

FIGS. 17A and 17B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. The CD 368 may be a CD-ROM or a DVD or similar. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer. transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising means for performing:
storing (42) current topology information of a network in a first database, wherein the network comprises a plurality of nodes;
storing (44), in a second schema of a second database, historical topology information of the network, wherein the current and historical topology information are retrievable for analysing a group of the plurality of nodes matching a filtering criteria or one or more of a plurality of topology identities, wherein the topology identities correspond to one or more of the filtering criteria;
storing (43) a plurality of topology definitions corresponding to the plurality of topology identities in a first schema of a second database, wherein the topology definitions correspond to the plurality of nodes matching the one or more of the plurality of topology identities or one or more of the filtering criteria;
receiving (97a) a request for current and/or historical topology information according to a specified filtering criteria, wherein the specified filtering criteria comprises one or more of the plurality of topology identities and/or one or more of the filtering criteria;
providing (97b), from the first schema of the second database, a topology definition matching the specified filtering criteria in the request;
providing (96c, 97c), from the first database, the current topology information matching the specified filtering criteria in the request; and
providing (97d), from the second schema of the second database, historical topology information matching the specified filtering criteria in the request, wherein the provided current and/or historical topology information is provided for representation according to relations between the plurality of nodes in the provided topology definition.

2. The apparatus as claimed in claim 1, wherein the historical topology information is further related to one or more attributes of one or more of the plurality of nodes.

3. The apparatus as claimed in any one of claims 1 and 2, wherein the topology information comprises information of one or more operations performed on one or more of the plurality of nodes, wherein the operations comprise creating a node or a node relationship, updating a node or a node relationship, and/or deleting a node or a node relationship.

4. The apparatus as claimed in any one of the preceding claims, wherein the topology information is provided as information suitable for display in graphical form.

5. The apparatus as claimed in any one of the preceding claims, wherein the first schema of the second database is arranged according to one or more of a topology identification, filtering criteria, date, and/or user identification

6. The apparatus as claimed in any one of the preceding claims, wherein the second schema of the second database is arranged according to one or more of a time stamp, a node type entity, a node relationship type entity, node identification, type of operation performed on a node or a node relationship, current node attributes, historical node attributes, node relationship attributes, user identification, and/or domain identification.

7. An apparatus as claimed in any one of the preceding claims, further comprising means for performing:
retrieving (102), from the second schema of the second database, in response to a request, historical topology information of a network according to a filtering criteria and a first historical time specified in the request;
determining (104) identities of first one or more nodes of the network as at the first historical time and relationships between the first one or more nodes of the network as at the first historical time; and
providing (106) information suitable for a graphical representation of the historical topology information, wherein the graphical representation comprises representations of the first one or more nodes of the network as at the historical time and representations of relationships between the first one or more nodes of the network as at the first historical time.

8. An apparatus as claimed in claim 7, further comprising:
retrieving (112), from the first database, current topology information;
determining (114) identities of second one or more nodes of the network as at the current time and relationships between the second one or more nodes of the network as at the current time; and
providing (116) comparison information between the identities of and relationships between the first one or more nodes and the identities of and relationships between the second one or more nodes.

9. The apparatus as claimed in claim 8, wherein the comparison information includes information regarding one or more operations performed on the first one or more nodes in a first time period between the first historical time and the current time.

10. The apparatus as claimed in any one of claims 8 and 9, wherein the second one or more nodes comprises one or more of the first one or more nodes.

11. The apparatus claimed in any preceding claim, wherein the first database further comprises a plurality of topology identities.

12. The apparatus claimed in any preceding claim, wherein the first database comprises a graph database and/or the second database comprises a relational database.

13. An apparatus as claimed in any one of the preceding claims, wherein the means comprise:
at least one processor; and
at least one memory including computer program code, the at least one memory and the computer program configured, with the at least one processor, to cause the performance of the apparatus.

14. A method comprising:
storing (42) current topology information of a network in a first database, wherein the network comprises a plurality of nodes;
storing (44) , in a second schema of the second database, historical topology informationof the network, wherein the current and historical topology information are retrievable for analysing a group of the plurality of nodes matching a filtering criteria or one or more of a plurality of topology identities, wherein the topology identities correspond to one or more of the filtering criteria;
storing (43) a plurality of topology definitions corresponding to the plurality of topology identities in a first schema of a second database, wherein the topology definitions correspond to the plurality of nodes matching the one or more of the plurality of topology identities or one or more of the filtering criteria;
receiving (97a) a request for current and/or historical topology information according to a specified filtering criteria, wherein the specified filtering criteria comprises one or more of the plurality of topology identities and/or one or more of the filtering criteria;
providing (97b), from the first schema of the second database, a topology definition matching the specified filtering criteria in the request;
providing (96c, 97c), from the first database, the current topology information matching the specified filtering criteria in the request; and
providing (97d), from the second schema of the second database, historical topology information matching the specified filtering criteria in the request
wherein the provided current and/or historical topology information is provided for representation according to relations between the plurality of nodes in the provided topology definition.

15. A computer program comprising instructions for causing an apparatus to perform at least the following:
storing (42) current topology information of a network in a first database, wherein the network comprises a plurality of nodes;
storing (44) , in a second schema of the second database, historical topology information of the network, wherein the current and historical topology information are retrievable for analysing a group of the plurality of nodes matching a filtering criteria or one or more of a plurality of topology identities, wherein the topology identities correspond to one or more of the filtering criteria;
storing (43) a plurality of topology definitions corresponding to the plurality of topology identities in a first schema of a second database, wherein the topology definitions correspond to the plurality of nodes matching the one or more of the plurality of topology identities or one or more of the filtering criteria;
receiving (97a) a request for current and/or historical topology information according to a specified filtering criteria, wherein the specified filtering criteria comprises one or more of the plurality of topology identities and/or one or more of the filtering criteria;
providing (97b), from the first schema of the second database, a topology definition matching the specified filtering criteria in the request;
providing (96c, 97c), from the first database, the current topology information matching the specified filtering criteria in the request; and
providing (97d), from the second schema of the second database, historical topology information matching the specified filtering criteria in the request, wherein the provided current and/or historical topology information is provided for representation according to relations between the plurality of nodes in the provided topology definition.

## Patentansprüche

1. Vorrichtung, die Mittel zum Durchführen von Folgendem umfasst:
Speichern (42) von aktuellen Topologieinformationen eines Netzwerks in einer ersten Datenbank, wobei das Netzwerk eine Vielzahl von Knoten umfasst;
Speichern (44) von historischen Topologieinformationen des Netzwerks in einem zweiten Schema einer zweiten Datenbank, wobei die aktuellen und die historischen Topologieinformationen zum Analysieren einer Gruppe der Vielzahl von Knoten, die mit einem Filterkriterien oder einer oder mehreren einer Vielzahl von Topologieidentitäten übereinstimmen, abrufbar sind, wobei die Topologieidentitäten einem oder mehreren der Filterkriterien entsprechen;
Speichern (43) einer Vielzahl von Topologiedefinitionen, die der Vielzahl von Topologieidentitäten entsprechen, in einem ersten Schema einer zweiten Datenbank, wobei die Topologiedefinitionen der Vielzahl von Knoten entsprechen, die mit der einen oder den mehreren der Vielzahl von Topologieidentitäten oder einem oder mehreren der Filterkriterien übereinstimmen;
Empfangen (97a) einer Anforderung von aktuellen und/oder historischen Topologieinformationen gemäß einem spezifizierten Filterkriterien, wobei die spezifizierten Filterkriterien eine oder mehrere der Vielzahl von Topologieidentitäten und/oder ein oder mehrere der Filterkriterien umfasst;
Bereitstellen (97b) einer Topologiedefinition, die mit den spezifizierten Filterkriterien in der Anforderung übereinstimmt, vom ersten Schema der zweiten Datenbank;
Bereitstellen (96c, 97c) der aktuellen Topologieinformationen, die mit den spezifizierten Filterkriterien in der Anforderung übereinstimmen, von der ersten Datenbank; und
Bereitstellen (97d) von historischen Topologieinformationen, die mit den spezifizierten Filterkriterien in der Anforderung übereinstimmen, vom zweiten Schema der zweiten Datenbank, wobei die bereitgestellten aktuellen und/oder historischen Topologieinformationen für eine Repräsentation gemäß Zusammenhängen zwischen der Vielzahl von Knoten in der bereitgestellten Topologiedefinition bereitgestellt werden.

2. Vorrichtung nach Anspruch 1, wobei sich die historischen Topologieinformationen ferner auf ein oder mehrere Attribute von einem oder mehreren der Vielzahl von Knoten beziehen.

3. Vorrichtung nach einem der Ansprüche 1 und 2, wobei die Topologieinformationen Informationen über eine oder mehrere Operationen umfassen, die an einem oder mehreren der Vielzahl von Knoten durchgeführt werden, wobei die Operationen das Erstellen eines Knotens oder einer Knotenbeziehung, das Aktualisieren eines Knotens oder einer Knotenbeziehung und/oder das Löschen eines Knotens oder einer Knotenbeziehung umfassen.

4. Vorrichtung nach einem der vorhergehenden Ansprüche, wobei die Topologieinformationen als Informationen bereitgestellt werden, die für eine Anzeige in einer grafischen Form geeignet sind.

5. Vorrichtung nach einem der vorhergehenden Ansprüche, wobei das erste Schema der zweiten Datenbank gemäß einem oder mehrerem von einer Topologieidentifikation, Filterkriterien, einem Datum und/oder einer Benutzeridentifikation angeordnet ist

6. Vorrichtung nach einem der vorhergehenden Ansprüche, wobei das zweite Schema der zweiten Datenbank gemäß einem oder mehrerem von einem Zeitstempel, einer Knotenartentität, einer Knotenbeziehungsartentität, einer Knotenidentifikation, einer Art einer Operation, die an einem Knoten oder einer Knotenbeziehung durchgeführt wird, aktuellen Knotenattributen, historischen Knotenattributen, Knotenbeziehungsattributen, einer Benutzeridentifikation und/oder einer Domänenidentifikation angeordnet ist.

7. Vorrichtung nach einem der vorhergehenden Ansprüche, die ferner Mittel zum Durchführen von Folgendem umfasst:
Abrufen (102) von historischen Topologieinformationen eines Netzwerks gemäß einem Filterkriterien und einer ersten historischen Zeit, die in einer Anforderung spezifiziert sind, in Reaktion auf die Anforderung vom zweiten Schema der zweiten Datenbank;
Bestimmen (104) von Identitäten von einem oder mehreren ersten Knoten des Netzwerks wie zu der ersten historischen Zeit und von Beziehungen zwischen dem einen oder den mehreren ersten Knoten des Netzwerks wie zu der ersten historischen Zeit; und
Bereitstellen (106) von Informationen, die für eine grafische Repräsentation der historischen Topologieinformationen geeignet sind, wobei die grafische Repräsentation Repräsentationen des einen oder der mehreren ersten Knoten des Netzwerks wie zu der historischen Zeit und Repräsentationen von Beziehungen zwischen dem einen oder den mehreren ersten Knoten des Netzwerks wie zu der ersten historischen Zeit umfasst.

8. Vorrichtung nach Anspruch 7, die ferner Folgendes umfasst:
Abrufen (112) von aktuellen Topologieinformationen aus der ersten Datenbank;
Bestimmen (114) von Identitäten von einem oder mehreren zweiten Knoten des Netzwerks wie zur aktuellen Zeit und von Beziehungen zwischen dem einen oder den mehreren zweiten Knoten des Netzwerks wie zur aktuellen Zeit; und
Bereitstellen (116) von Vergleichsinformationen zwischen den Identitäten des einen oder der mehreren ersten Knoten und Beziehungen zwischen dem einen oder der mehreren ersten Knoten und den Identitäten des einen oder der mehreren zweiten Knoten und Beziehungen zwischen dem einen oder der mehreren zweiten Knoten.

9. Vorrichtung nach Anspruch 8, wobei die Vergleichsinformationen Informationen beinhalten, die sich auf eine oder mehrere Operationen beziehen, die an dem einen oder den mehreren ersten Knoten in einer ersten Zeitperiode zwischen der ersten historischen Zeit und der aktuellen Zeit durchgeführt werden.

10. Vorrichtung nach einem der Ansprüche 8 und 9, wobei der eine oder die mehreren zweiten Knoten einen oder mehrere des einen oder der mehreren ersten Knoten umfassen.

11. Vorrichtung nach einem der vorhergehenden Ansprüche, wobei die erste Datenbank ferner eine Vielzahl von Topologieidentitäten umfasst.

12. Vorrichtung nach einem der vorhergehenden Ansprüche, wobei die erste Datenbank eine grafische Datenbank umfasst und/oder die zweite Datenbank eine relationale Datenbank umfasst.

13. Vorrichtung nach einem der vorhergehenden Ansprüche, wobei die Mittel Folgendes umfassen:
mindestens einen Prozessor; und
mindestens einen Speicher, der einen Computerprogrammcode beinhaltet, wobei der mindestens eine Speicher und das Computerprogramm dazu ausgelegt sind, mit dem mindestens einen Prozessor die Durchführung der Vorrichtung zu veranlassen.

14. Verfahren, das Folgendes umfasst:
Speichern (42) von aktuellen Topologieinformationen eines Netzwerks in einer ersten Datenbank, wobei das Netzwerk eine Vielzahl von Knoten umfasst;
Speichern (44) von historischen Topologieinformationen des Netzwerks in einem zweiten Schema der zweiten Datenbank, wobei die aktuellen und die historischen Topologieinformationen zum Analysieren einer Gruppe der Vielzahl von Knoten, die mit einem Filterkriterien oder einer oder mehreren einer Vielzahl von Topologieidentitäten übereinstimmen, abrufbar sind, wobei die Topologieidentitäten einem oder mehreren der Filterkriterien entsprechen;
Speichern (43) einer Vielzahl von Topologiedefinitionen, die der Vielzahl von Topologieidentitäten entsprechen, in einem ersten Schema einer zweiten Datenbank, wobei die Topologiedefinitionen der Vielzahl von Knoten entsprechen, die mit der einen oder den mehreren der Vielzahl von Topologieidentitäten oder einem oder mehreren der Filterkriterien übereinstimmen;
Empfangen (97a) einer Anforderung von aktuellen und/oder historischen Topologieinformationen gemäß einem spezifizierten Filterkriterien, wobei die spezifizierten Filterkriterien eine oder mehrere der Vielzahl von Topologieidentitäten und/oder ein oder mehrere der Filterkriterien umfasst;
Bereitstellen (97b) einer Topologiedefinition, die mit den spezifizierten Filterkriterien in der Anforderung übereinstimmt, vom ersten Schema der zweiten Datenbank;
Bereitstellen (96c, 97c) der aktuellen Topologieinformationen, die mit den spezifizierten Filterkriterien in der Anforderung übereinstimmen, von der ersten Datenbank; und
Bereitstellen (97d) von historischen Topologieinformationen, die mit den spezifizierten Filterkriterien in der Anforderung übereinstimmen, vom zweiten Schema der zweiten Datenbank,
wobei die bereitgestellten aktuellen und/oder historischen Topologieinformationen für eine Repräsentation gemäß Zusammenhängen zwischen der Vielzahl von Knoten in der bereitgestellten Topologiedefinition bereitgestellt werden.

15. Computerprogramm, das Anweisungen zum Veranlassen einer Vorrichtung, mindestens Folgendes durchzuführen, umfasst:
Speichern (42) von aktuellen Topologieinformationen eines Netzwerks in einer ersten Datenbank, wobei das Netzwerk eine Vielzahl von Knoten umfasst;
Speichern (44) von historischen Topologieinformationen des Netzwerks in einem zweiten Schema der zweiten Datenbank, wobei die aktuellen und die historischen Topologieinformationen zum Analysieren einer Gruppe der Vielzahl von Knoten, die mit einem Filterkriterien oder einer oder mehreren einer Vielzahl von Topologieidentitäten übereinstimmen, abrufbar sind, wobei die Topologieidentitäten einem oder mehreren der Filterkriterien entsprechen;
Speichern (43) einer Vielzahl von Topologiedefinitionen, die der Vielzahl von Topologieidentitäten entsprechen, in einem ersten Schema einer zweiten Datenbank, wobei die Topologiedefinitionen der Vielzahl von Knoten entsprechen, die mit der einen oder den mehreren der Vielzahl von Topologieidentitäten oder einem oder mehreren der Filterkriterien übereinstimmen;
Empfangen (97a) einer Anforderung von aktuellen und/oder historischen Topologieinformationen gemäß einem spezifizierten Filterkriterien, wobei die spezifizierten Filterkriterien eine oder mehrere der Vielzahl von Topologieidentitäten und/oder ein oder mehrere der Filterkriterien umfasst;
Bereitstellen (97b) einer Topologiedefinition, die mit den spezifizierten Filterkriterien in der Anforderung übereinstimmt, vom ersten Schema der zweiten Datenbank;
Bereitstellen (96c, 97c) der aktuellen Topologieinformationen, die mit den spezifizierten Filterkriterien in der Anforderung übereinstimmen, von der ersten Datenbank; und
Bereitstellen (97d) von historischen Topologieinformationen, die mit den spezifizierten Filterkriterien in der Anforderung übereinstimmen, vom zweiten Schema der zweiten Datenbank, wobei die bereitgestellten aktuellen und/oder historischen Topologieinformationen für eine Repräsentation gemäß Zusammenhängen zwischen der Vielzahl von Knoten in der bereitgestellten Topologiedefinition bereitgestellt werden.

## Revendications

1. Appareil comprenant des moyens pour effectuer ce qui suit :
stocker (42) des informations topologiques actuelles d'un réseau dans une première base de données,
dans lequel le réseau comprend une pluralité de nœuds ;
dans un deuxième schéma d'une deuxième base de données, stocker (44) des informations topologiques historiques du réseau, dans lequel les informations topologiques actuelles et historiques peuvent être récupérées pour analyser un groupe de la pluralité de nœuds concordant avec des critères de filtrage ou une ou plusieurs identités d'une pluralité d'identités topologiques, dans lequel les identités topologiques correspondant à un ou plusieurs critères des critères de filtrage ;
stocker (43) une pluralité de définitions topologiques correspondant à la pluralité d'identités topologiques dans un premier schéma d'une deuxième base de données, dans lequel les définitions topologiques correspondant à la pluralité de nœuds concordant avec les une ou plusieurs identités de la pluralité d'identités topologiques ou un ou plusieurs critères des critères de filtrage ;
recevoir (97a) une demande d'informations topologiques actuelles et/ou historiques selon des critères de filtrage spécifiés, dans lequel les critères de filtrage spécifiés comprennent une ou plusieurs identités de la pluralité d'identités topologiques et/ou un ou plusieurs critères des critères de filtrage ;
fournir (97b), à partir du premier schéma de la deuxième base de données, une définition topologique concordant avec les critères de filtrage spécifiés dans la demande ;
fournir (96c, 97c), à partir de la première base de données, les informations topologiques actuelles concordant avec les critères de filtrage spécifiés dans la demande ; et
fournir (97d), à partir du deuxième schéma de la deuxième base de données, des informations topologiques historiques concordant avec les critères de filtrage spécifiés dans la demande, dans lequel les informations topologiques actuelles et/ou historiques fournies sont fournies pour une représentation selon des relations entre la pluralité de nœuds dans la définition topologique fournie.

2. Appareil selon la revendication 1, dans lequel les informations topologiques historiques sont en outre liées à un ou plusieurs attributs d'un ou plusieurs nœuds de la pluralité de nœuds.

3. Appareil selon l'une des revendications 1 et 2, dans lequel les informations topologiques comprennent des informations d'une ou plusieurs opérations effectuées sur un ou plusieurs nœuds de la pluralité de nœuds, dans lequel les opérations comprennent la création d'un nœud ou d'une relation de nœud, la mise à jour d'un nœud ou d'une relation de nœud, et/ou la suppression d'un nœud ou d'une relation de nœud.

4. Appareil selon l'une des revendications précédentes, dans lequel les informations topologiques sont fournies sous forme d'informations convenant à un affichage sous forme graphique.

5. Appareil selon l'une des revendications précédentes, dans lequel le premier schéma de la deuxième base de données est agencé selon un ou plusieurs parmi une identification topologique, des critères de filtrage, une date et/ou une identification utilisateur.

6. Appareil selon l'une des revendications précédentes, dans lequel le deuxième schéma de la deuxième base de données est agencé selon un ou plusieurs parmi un horodatage, une entité de type nœud, une entité de type relation de nœud, une identification de nœud, un type d'opération effectuée sur un nœud ou une relation de nœud, des attributs de nœuds actuels, des attributs de nœuds historiques, des attributs de relation de nœud, une identification d'utilisateur et/ou une identification de domaine.

7. Appareil selon l'une des revendications précédentes, comprenant en outre des moyens pour effectuer ce qui suit :
en réponse à une demande, récupérer (102), à partir du deuxième schéma de la deuxième base de données, des informations topologiques historiques d'un réseau selon des critères de filtrage et une première heure historique spécifiée dans la demande ;
déterminer (104) des identités d'un premier nœud ou plus du réseau comme étant à la première heure historique et des relations entre les premier nœud ou plus du réseau comme étant à la première heure historique ; et
fournir (106) des informations convenant à une représentation graphique des informations topologiques historiques, dans lequel la représentation graphique comprend des représentations des premier nœud ou plus du réseau comme étant à l'heure historique et des représentations des relations entre les premier nœud ou plus du réseau comme étant à la première heure historique.

8. Appareil selon la revendication 7, comprenant en outre ce qui suit :
récupérer (112), à partir de la première base de données, des informations topologiques actuelles ;
déterminer (114) des identités d'un deuxième nœud ou plus du réseau comme étant à l'heure actuelle et des relations entre les deuxième nœud ou plus du réseau comme étant à l'heure actuelle ; et
fournir (116) des informations de comparaison entre les identités et les relations entre les premier nœud ou plus et les identités et les relations entre les deuxième nœud ou plus.

9. Appareil selon la revendication 8, dans lequel les informations de comparaison comportent des informations concernant une ou plusieurs opérations effectuées sur les premier nœud ou plus dans une première période de temps entre la première heure historique et l'heure actuelle.

10. Appareil selon l'une des revendications 8 et 9, dans lequel les deuxième nœud ou plus comprennent un ou plusieurs des premier nœud ou plus.

11. Appareil selon l'une des revendications précédentes, dans lequel la première base de données comprend en outre une pluralité d'identités topologiques.

12. Appareil selon l'une des revendications précédentes, dans lequel la première base de données comprend une base de données graphique et/ou la deuxième base de données comprend une base de données relationnelle.

13. Appareil selon l'une des revendications précédentes, dans lequel les moyens comprennent :
au moins un processeur ; et
au moins une mémoire comportant un code de programme informatique, l'au moins une mémoire et le programme informatique étant configurés, avec l'au moins un processeur, pour assurer la performance de l'appareil.

14. Procédé comprenant les étapes suivantes :
stocker (42) des informations topologiques actuelles d'un réseau dans une première base de données,
dans lequel le réseau comprend une pluralité nœuds ;
dans un deuxième schéma de la deuxième base de données, stocker (44) des informations topologiques historiques du réseau, dans lequel les informations topologiques actuelles et historiques peuvent être récupérées pour analyser un groupe de la pluralité de nœuds concordant avec des critères de filtrage ou une ou plusieurs identités d'une pluralité d'identités topologiques, dans lequel les identités topologiques correspondent à un ou plusieurs critères des critères de filtrage ;
stocker (43) une pluralité de définitions topologiques correspondant à la pluralité d'identités topologiques dans un premier schéma d'une deuxième base de données, dans lequel les définitions topologiques correspondant à la pluralité de nœuds concordant avec les une ou plusieurs identités de la pluralité d'identités topologiques ou un ou plusieurs critères des critères de filtrage ;
recevoir (97a) une demande d'informations topologiques actuelles et/ou historiques selon des critères de filtrage spécifiés, dans lequel les critères de filtrage spécifiés comprennent une ou plusieurs identités de la pluralité d'identités topologiques et/ou un ou plusieurs critères des critères de filtrage ;
fournir (97b), à partir du premier schéma de la deuxième base de données, une définition topologique concordant avec les critères de filtrage spécifiés dans la demande ;
fournir (96c, 97c), à partir de la première base de données, les informations topologiques actuelles concordant avec les critères de filtrage spécifiés dans la demande ; et
fournir (97d), à partir du deuxième schéma de la deuxième base de données, des informations topologiques historiques concordant avec les critères de filtrage spécifiés dans la demande
dans lequel les informations topologiques actuelles et/ou historiques fournies sont fournies pour une représentation selon des relations entre la pluralité de nœuds dans la définition topologique fournie.

15. Programme informatique comprenant des instructions pour amener un appareil à effectuer au moins ce qui suit :
stocker (42) des informations topologiques actuelles d'un réseau dans une première base de données, dans lequel le réseau comprend une pluralité de nœuds ;
dans un deuxième schéma de la deuxième base de données, stocker (44) des informations topologiques historiques du réseau, dans lequel les informations topologiques actuelles et historiques peuvent être récupérées pour analyser un groupe de la pluralité de nœuds concordant avec des critères de filtrage ou une ou plusieurs identités d'une pluralité d'identités topologiques, dans lequel les identités topologiques correspondant à un ou plusieurs critères des critères de filtrage ;
stocker (43) une pluralité de définitions topologiques correspondant à la pluralité d'identités topologiques dans un premier schéma d'une deuxième base de données, dans lequel les définitions topologiques correspondant à la pluralité de nœuds concordant avec les une ou plusieurs identités de la pluralité d'identités topologiques ou un ou plusieurs critères des critères de filtrage ;
recevoir (97a) une demande d'informations topologiques actuelles et/ou historiques selon des critères de filtrage spécifiés, dans lequel les critères de filtrage spécifiés comprennent une ou plusieurs identités de la pluralité d'identités topologiques et/ou un ou plusieurs critères des critères de filtrage ;
fournir (97b), à partir du premier schéma de la deuxième base de données, une définition topologique concordant avec les critères de filtrage spécifiés dans la demande ;
fournir (96c, 97c), à partir de la première base de données, les informations topologiques actuelles concordant avec les critères de filtrage spécifiés dans la demande ; et
fournir (97d), à partir du deuxième schéma de la deuxième base de données, des informations topologiques historiques concordant avec les critères de filtrage spécifiés dans la demande, dans lequel les informations topologiques actuelles et/ou historiques fournies sont fournies pour une représentation selon des relations entre la pluralité de nœuds dans la définition topologique fournie.
